# EUROPEAN PATENT APPLICATION

(11) **EP 4 207 115 A1**
(43) Date of publication of application: **05.07.2023**
(21) Application number: 21861802.3
(22) Date of filing: 16.02.2021
(51) Int. Cl.: G07F 17/40, G06Q 10/00, G06Q 30/06

(54) **DEVICE FOR PURCHASING MOBILE PHONE**

(30) Priority: 28.08.2020 KR 20200109070
(71) Applicant: Mintit Co., Ltd., Gyeonggi-do 10117 (KR)
(72) Inventor: CHO, Sung Lack, Seoul 03913 (KR); CHOI, Hang Seok, Seoul 08371 (KR)
(74) Representative: Cabinet Beau de Loménie
(86) International application number: PCT/KR2021/001964
(87) International publication number: WO 2022/045498

(57) **Abstract**

A device for purchasing a mobile phone, according to one embodiment, comprises an inspection unit for accommodating a mobile phone and inspecting same, wherein the inspection unit may comprise: a housing; a base arranged inside the housing and on which the mobile phone is placed; a plurality of cameras arranged on the upper surface, the lower surface, and a side surface of the housing; a plurality of mirrors arranged near the base; and a collecting element which is arranged on the lower side of the housing and collects the mobile phone for which inspection is complete. Here, the plurality of cameras may capture images of the mobile phone and images reflected by the plurality of mirrors.

## Description

### Technical Field

The following example embodiments relate to a mobile phone purchasing apparatus.

### Background Art

As semiconductor and information technology (IT) have been developed rapidly, numerous consumers are able to newly purchase upgraded products that are newly added and improved by manufacturers every year, and thus numerous electronic devices such as portable terminals, laptops, personal computers (PCs), tablets, and MP3 may be dumped or become used products every year. These used products may be purchased through various distribution methods and exported to developing countries, except for some of them being resold through used mobile phone resales, or domestically recycled by waste disassembling.

However, these used mobile phones may be purchased by retailers (e.g., including intermediary wholesalers) having unmanned purchase kiosks (unmanned devices) or certain office spaces, and particularly the purchases made through various retailers may pose some issues.

In the case of store operation, in particular, not all operators may be able to test and verify devices under consistent criteria, and there may thus be a great deviation in the value assessment of target devices depending on the level of verification. In addition, a store may be operated by part-time personnel, in addition to an owner (operator) of the store, and thus providing accurate samples to customers on the selling side may be failed, causing a mutual disagreement issue.

In addition, used electronic devices may be purchased and distributed online, and there may thus be a potentially high risk of increasing a crime rate due to the nature of Internet services provided on the premise of anonymity, and recipients may not sell used electronic devices online but store them because they have no way to identify a transparent distribution structure, which may be greatly inefficient in terms of recycling resources and may force the recipients to purchase new used electronic devices while giving up the profits that may be generated otherwise by reselling used electronic devices.

Further, unmanned sales may not be readily realized in the case of used mobile phones because there are various types for each manufacturer and identifying their individual states is not easy. Korean Patent Registration Publication No. 10-0892266 discloses a system for purchasing used electronic devices.

### Disclosure of Invention

### Technical Goals

An objective according to an embodiment is to provide a mobile phone purchasing apparatus that may include data cables according to various types, and may automatically and precisely inspect a state of a mobile phone connected to a connector of a cable, calculate a purchasing price of the mobile phone, and then purchase and collect the mobile phone.

An objective according to an embodiment is to provide a mobile phone purchasing apparatus that may readily separate a data cable from a mobile phone accommodated in an inspection unit, stably and readily drop the mobile phone toward a collection element, and more accurately capture an image of an exterior of the mobile phone.

### Technical Solutions

According to an embodiment, a mobile phone purchasing apparatus includes an inspection unit configured to accommodate a mobile phone and perform an inspection on the mobile phone. The inspection unit may include a housing, a base disposed in the housing, on which the mobile phone is disposed, a plurality of cameras respectively disposed on upper, lower, and side surfaces of the housing, a plurality of mirrors disposed around the base, and a collection element disposed under the housing and configured to collect the mobile phone that has been inspected. In this case, each of the plurality of cameras may capture an image of the mobile phone and images reflected by the plurality of mirrors.

A first camera disposed on an upper side of the housing may capture an image of an upper surface of the mobile phone and an image of a side surface of the mobile phone reflected by the plurality of mirrors, a second camera disposed on a side surface of the housing may capture an image of a liquid crystal of the mobile phone, and a third camera disposed on a lower side of the housing may capture an image of a lower surface of the mobile phone.

In addition, the inspection unit may include a first lighting element, a second lighting element, a third lighting element, and a fourth lighting element respectively disposed on a front surface, a left side surface, a rear surface, and a right side surface of the housing, which are disposed on an upper side with respect to the base; and may include a fifth lighting element and a sixth lighting element respectively disposed on a left side surface and a right side surface of the housing, which are disposed on a lower side with respect to the base.

The first lighting element and the third lighting element may be emitted at a first color temperature, the second lighting element and the fifth lighting element may be emitted at a second color temperature, and the fourth lighting element and the sixth lighting element may be emitted at a third color temperature.

In addition, the inspection unit may further include a plate disposed on an upper side of the base and having a rectangular opening formed at a center thereof, a first support element formed in a shape surrounding front, left, and right sides of the opening, and a second support element configured to be movable behind the opening. The first mirror, the second mirror, and the third mirror may be respectively disposed on front, left, and right sides of the first support element, and the fourth mirror may be disposed on the second support element. An image of a side surface of the mobile phone disposed on the base may be reflected by the first to fourth mirrors.

In this case, a hole configured to guide a data cable connectable to the mobile phone may be formed on the second support element, and the base may move forward or backward. When the base moves backward, a movement of the mobile phone may be limited by the second support element and only the data cable may move backward along with the base, and the data cable may be separated from the mobile phone. In addition, when the base moves backward by a predetermined or greater level, the mobile phone may fall toward the collection element by gravity.

In this case, the inspection unit may further include a guide element disposed on the plate and configured to guide a vertical motion of the second support element, a connection element configured to connect the second support element and the guide element and move the second support element, and a driving element configured to drive the connection element. The second support element may move upward or downward as the connection element is driven.

Alternatively, the inspection unit may further include a cam element disposed on the plate and configured to guide a rotational motion of the second support element, a link element configured to connect the second support element and the cam element and rotate the second support element, and a driving element configured to drive the cam element. The second support element may rotate with respect to a shaft passing through an upper end of the second support element as the cam element and the link element are driven.

### Effects

A mobile phone purchasing apparatus according to an embodiment may include data cables according to various types, automatically and precisely inspect a state of a mobile phone connected to a connector of a cable, calculate a purchasing price of the mobile phone, and then purchase and collect the mobile phone.

A mobile phone purchasing apparatus according to an embodiment may readily separate a data cable from a mobile phone accommodated in an inspection unit, stably and readily drop the mobile phone toward a collection element, and more accurately capture an image of an exterior of the mobile phone.

### Brief Description of Drawings

FIGS. 1 through 3 show a mobile phone purchasing apparatus according to an embodiment.
FIGS. 4 and 5 show in detail an inspection unit of a mobile phone purchasing apparatus according to an embodiment.
FIGS. 6 and 7 show in detail a configuration that drives a second support element of an inspection unit of a mobile phone purchasing apparatus according to an embodiment.
FIGS. 8 and 9 show in detail a driving mechanism of a base of a mobile phone purchasing apparatus according to an embodiment.

### Best Mode for Carrying Out the Invention

Hereinafter, example embodiments will be described in detail with reference to the accompanying drawings. However, various modifications may be made to the example embodiments, and the scope of matters claimed herein are not limited or restricted by these example embodiments. The example embodiments should be understood to include all changes, equivalents, and replacements within the idea and the technical scope of the present disclosure.

The terms used herein are for the purpose of describing particular example embodiments only and are not to be limiting of the example embodiments. The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which example embodiments pertain. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In addition, when describing the example embodiments with reference to the accompanying drawings, like reference numerals refer to like constituent elements and a repeated description related thereto will be omitted. In the description of example embodiments, detailed description of well-known related structures or functions will be omitted when it is deemed that such description will cause ambiguous interpretation of the present disclosure.

In addition, in the description of the components, terms such as first, second, A, B, (a), (b) or the like may be used herein when describing components of the example embodiments. These terms are used only for the purpose of discriminating one element from another element, and the nature, the sequences, or the orders of the elements are not limited by the terms. When one element is described as being "connected," "coupled," or "attached" to another element, it should be understood that one element may be connected or attached directly to another element, and an intervening element may also be "connected," "coupled," or "attached" to the elements.

The same name may be used to describe an element included in one example embodiment and an element having a common function as the foregoing element in another example embodiment. Unless otherwise defined, the description of the example embodiments may be applicable to the following example embodiments and a repeated description related thereto will be omitted for conciseness.

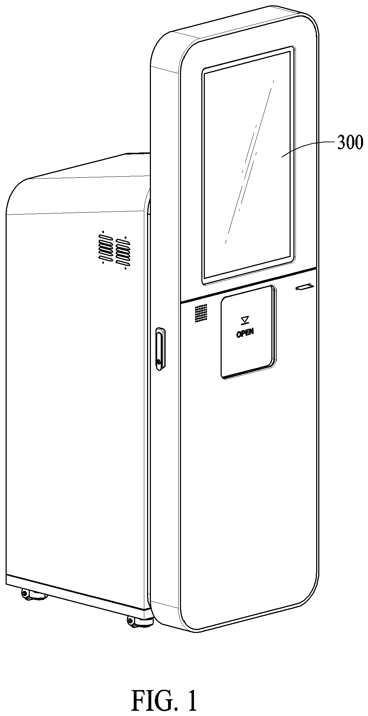

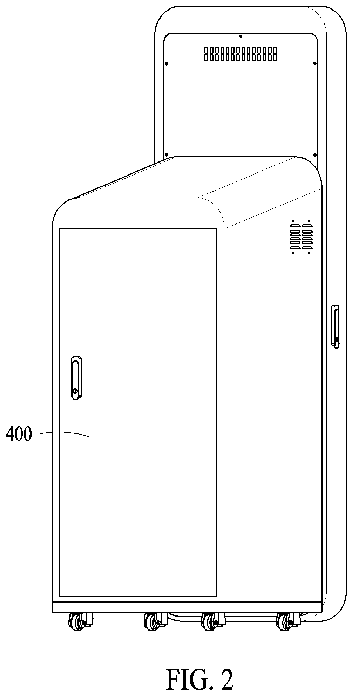

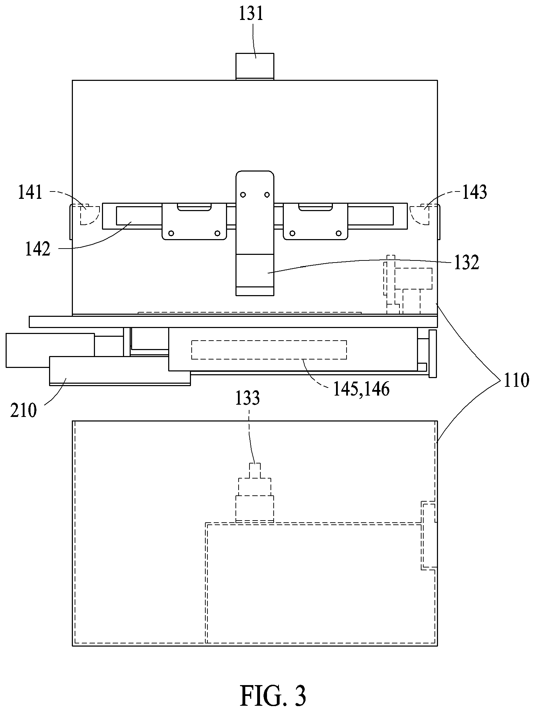

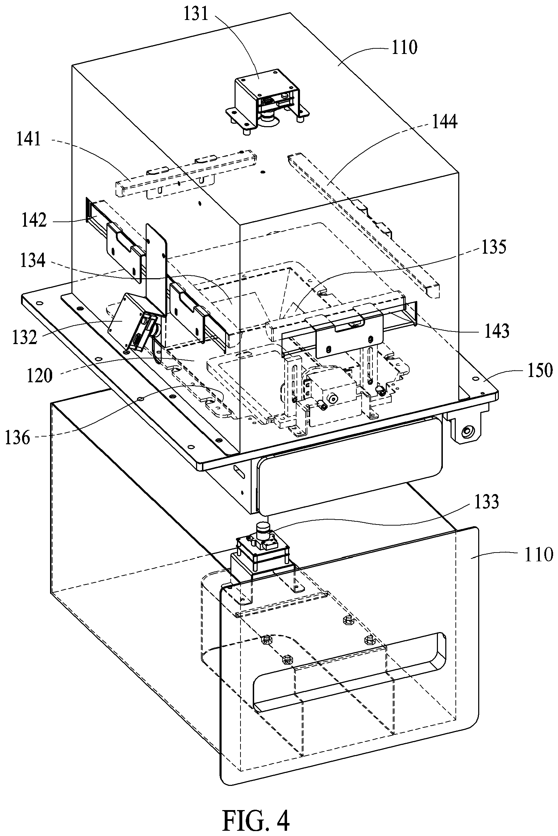

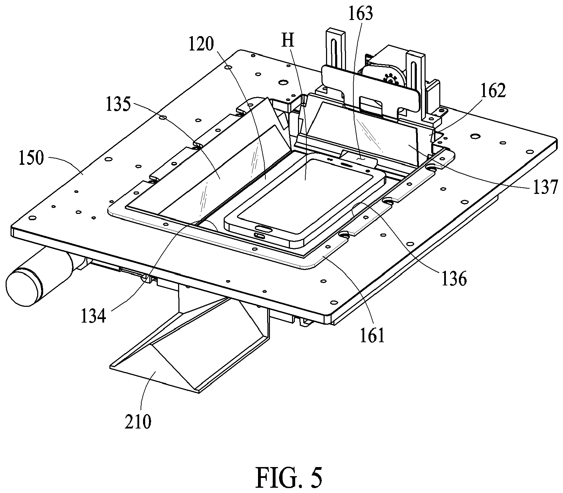

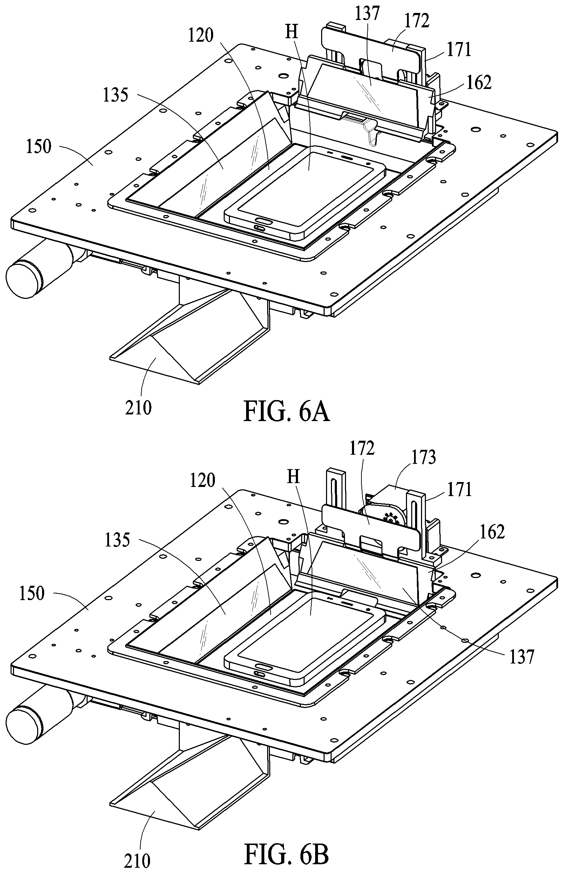

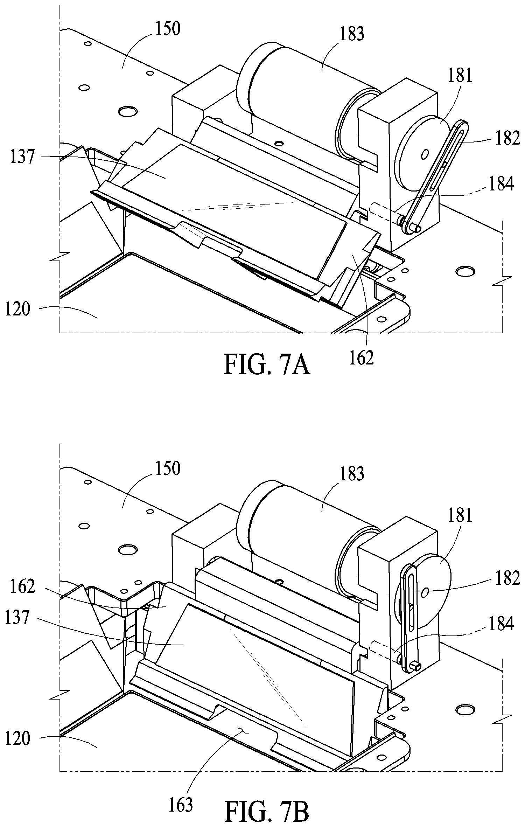

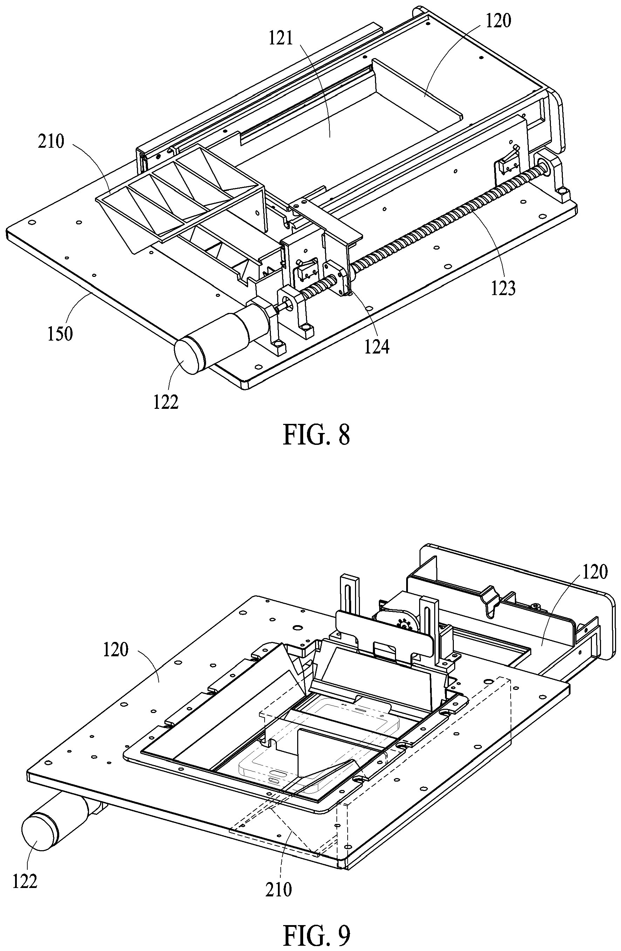

FIGS. 1 through 3 show a mobile phone purchasing apparatus according to an embodiment, FIGS. 4 and 5 show in detail an inspection unit of a mobile phone purchasing apparatus according to an embodiment, FIGS. 6 and 7 show in detail a configuration that drives a second support element of an inspection unit of a mobile phone purchasing apparatus according to an embodiment, and FIGS. 8 and 9 show in detail a driving mechanism of a base of a mobile phone purchasing apparatus according to an embodiment.

Referring to FIGS. 1 to 3, a mobile phone purchasing apparatus according to an embodiment may include an inspection unit 100 configured to accommodate a mobile phone and perform an inspection on the mobile phone, a display unit 300 disposed on one outer side surface of the inspection unit 100 and configured to select a purchase-related function for the mobile phone or display information associated with the mobile phone, and a unloading unit 400 configured to take out the mobile phone.

In this case, a plurality of cameras may be disposed on the upper, lower, and side surfaces of an inner side of the inspection unit 100 to enable an automatic inspection of a state of a mobile phone H when the mobile phone is accommodated in the inspection unit 100 and enable an automatic fall of the mobile phone toward a collection element disposed on a lower side of a housing as a base disposed in the inspection unit 100 moves when the inspection by the inspection unit 100 has been completed.

In the display unit 300, a touch liquid-crystal display (LCD), a printer, a drawer door, a speaker, a front door handle, or the like may be disposed, and all of the foregoing components may be integrally attached to one large front door to form a structure that may be opened and closed in a casement manner. In addition, parts related to power, a control board, and a light-emitting diode (LED) board may be installed in an internal mechanism unit.

The unloading unit 400 may be of a structure that may be opened or closed using a handle, and a transport element such as a wheel may be installed at a bottom of the apparatus such that the apparatus may move altogether.

Referring to FIGS. 4 and 5, the inspection unit 100 may include a housing 110, a base 120 disposed in the housing 110 and on which a mobile phone is to be disposed, a plurality of cameras 131, 132, and 133 respectively disposed on the upper, lower, and side surfaces of the housing 110, and a plurality of mirrors 134, 135, 136, and 137 disposed around the base 120. In this case, the plurality of cameras may each capture an image of the mobile phone and images reflected by the plurality of mirrors.

The first camera 131 disposed on an upper side of the housing 110 may capture an image of an upper surface of the mobile phone and an image of a side surface of the mobile phone reflected by the plurality of mirrors 134, 135, 136, and 137, the second camera 132 disposed on a side of the housing 110 may capture an image of a liquid crystal of the mobile phone, and the third camera 133 disposed on a lower side of the housing 110 may capture an image of a lower surface of the mobile phone. Such a configuration may minimize the number of cameras and maximize the definition of an image to be captured, using three cameras and a plurality of mirrors.

In addition, the inspection unit 100 may include a first lighting element 141, a second lighting element 142, a third lighting element 143, and a fourth lighting element 144 respectively disposed on front, left, rear, and right sides of the housing 110, which are positioned on an upper side with respect to the base 120, and may also include a fifth lighting element 145 and a sixth lighting element 146 respectively disposed on the left and right sides of the housing 110, which are positioned on a lower side with respect to the base 120.

In this case, the first lighting element 141 and the third lighting element 143 may radiate at a first color temperature, the second lighting element 142 and the fifth lighting element 145 may radiate at a second color temperature, and the fourth lighting element 144 and the sixth lighting element 146 may radiate at a third color temperature.

For example, the first color temperature may be 3000 Kelvin (K), the second color temperature may be 6500K, and the third color temperature may be 10000K. Such a configuration may allow respective lighting elements to radiate in different color temperatures, thereby enabling stereoscopic lighting and capturing an image of the mobile phone without light interference.

In addition, the inspection unit 100 may further include a plate 150 disposed on an upper side of the base 120 and having a rectangular opening at the center, a first support element 161 formed in a shape surrounding the front, and left and right sides of the opening, and a second support element 162 configured to be movable behind the opening. The first mirror 134, the second mirror 135, and the third mirror 136 may be respectively disposed on the front, and left and right sides of the first support element 161. In addition, the fourth mirror 137 may be disposed on the second support element 162, and an image of a side surface of a mobile phone disposed on the base 120 may be reflected by the first to fourth mirrors.

In this case, a hole 163 configured to guide a data cable connectable to the mobile phone may be formed on the second support element 162, and the base 120 may move forward or backward. When the base 120 moves backward, a movement of a mobile phone H may be limited by the second support element 162. That is, as only the base 120 moves backward and one end of the mobile phone is no longer movable by the second support element 162, only the base 120 supporting the mobile phone may move backward. Therefore, as only the data cable moves backward along with the base 120, the data cable may be separated from the mobile phone. In addition, when the mobile phone is no longer supported by the base 120 because the base 120 moves backward by a predetermined or greater level, the mobile phone may fall toward a slope 210 by gravity.

Referring to FIGS. 6A and 6B, the inspection unit 100 may further include a guide element 171 disposed on the plate 150 and configured to guide a vertical motion of the second support element 162, a connection element 172 configured to connect the second support element 162 and the guide element 171 and move the second support element 162, and a driving element 173 configured to drive the connection element 172. The second support element 162 may move upward or downward by the driving of the connection element 172. In this case, the driving element 173 may include a cam and a servomotor.

Through this configuration, when the servomotor is driven, the cam may rotate, and a pin of the connection element 172 connected to the rotating cam may move along a groove of the guide element 171, so that the second support element 162 connected to the connection element 172 may descend to block the opening of the base 120. Accordingly, when the base 120 moves backward, a movement of the mobile phone may be limited by the second support element 162, and when the base 120 moves backward by a predetermined or greater level, the mobile phone may naturally fall toward the slope 210 by gravity.

Alternatively, referring to FIGS. 7A and 7B, the inspection unit 100 may include a cam element 181 disposed on the plate 150 and configured to guide a rotational motion of the second support element 162, a link element 182 configured to connect the second support element 162 and the cam element 181 and rotate the second support element 162, and a driving element 183 configured to drive the cam element 181, and the second support element 162 may rotate with respect to a shaft 184 passing through an upper end of the second support element 162 as the cam element 181 and the link element 182 are driven. In this case, the driving element 183 may be provided as a motor.

Through this configuration, the motor may rotate the cam element 181, and when the link element 182 is driven by the rotation of the cam element 181, the second support element 162 may be rotated such that the second support element 162 is separated from the base 120. Accordingly, when it is in an open state, a user may dispose a mobile phone on the base 120, and when the second support element 162 rotates in a reverse direction as the cam element 181 is driven again, the second support element 162 may be seated on the base 120 to implement a closed state. Subsequently, when the base 120 moves backward, a movement of the mobile phone may be limited by the second support element 162, and when the base 120 moves backward by a predetermined or greater level, the mobile phone may naturally fall toward the slope 210 by gravity.

In addition, the inspection unit 100 may include a component configured to attach and detach a barcode label to and from a mobile phone and a component configured to sterilize the mobile phone.

Referring to FIG. 8, a tempered glass 121 may be disposed on the base 120, and the tempered glass 121 may be opened and closed through a slide rail. In addition, the base 120 may move forward and backward by a rotational force of a linear screw 123 driven by a motor 122. In this case, noise and vibration may be prevented by a plastic nut 124 disposed at one end of the linear screw 123.

Through this configuration, as shown in FIG. 9, the base 120 may move forward and backward with respect to the plate 150, and when the base 120 moves behind the plate 150, a mobile phone supported by the base 120 may naturally fall toward the collection element by gravity.

The mobile phone purchasing apparatus including the components described above may have data cables suitable for various types, and may be configured to automatically and precisely inspect a state of a mobile phone connected to a connector of a cable, calculate a purchasing price of the mobile phone and collect it. In addition, the mobile phone purchasing apparatus may readily sperate a data cable from a mobile phone accommodated in an inspection unit, stably and readily drop the mobile phone toward a collection element, and more accurately capture an image of an exterior of the mobile phone.

A number of example embodiments have been described above. Nevertheless, it should be understood that various technical changes and modifications may be made to these embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A mobile phone purchasing apparatus, comprising:
an inspection unit configured to accommodate a mobile phone and perform an inspection on the mobile phone,
wherein the inspection unit comprises:
a housing;
a base disposed in the housing, on which the mobile phone is disposed;
a plurality of cameras disposed on upper, lower, and side surfaces of the housing, respectively;
a plurality of mirrors disposed around the base; and
a collection element disposed under the housing and configured to collect the mobile phone that has been inspected,
wherein each of the plurality of cameras is configured to capture an image of the mobile phone and images reflected by the plurality of mirrors.

2. The mobile phone purchasing apparatus of claim 1, wherein a first camera disposed on an upper side of the housing is configured to capture an image of an upper surface of the mobile phone and an image of a side surface of the mobile phone reflected by the plurality of mirrors,
a second camera disposed on a side surface of the housing is configured to capture an image of a liquid crystal of the mobile phone, and
a third camera disposed on a lower side of the housing is configured to capture an image of a lower surface of the mobile phone.

3. The mobile phone purchasing apparatus of claim 2, wherein the inspection unit comprises:
a first lighting element, a second lighting element, a third lighting element, and a fourth lighting element disposed on a front surface, a left side surface, a rear surface, and a right side surface of the housing, respectively, which are disposed on an upper side with respect to the base; and
a fifth lighting element and a sixth lighting element disposed on a left side surface and a right side surface of the housing, respectively, which are disposed on a lower side with respect to the base,
wherein the first lighting element and the third lighting element are configured to be emitted at a first color temperature, the second lighting element and the fifth lighting element are configured to be emitted at a second color temperature, and the fourth lighting element and the sixth lighting element are configured to be emitted at a third color temperature.

4. The mobile phone purchasing apparatus of claim 3, wherein the inspection unit further comprises:
a plate disposed on an upper side of the base and having a rectangular opening formed at a center thereof;
a first support element formed in a shape surrounding front, left, and right sides of the opening; and
a second support element configured to be movable behind the opening,
wherein the first mirror, the second mirror, and the third mirror are disposed on front, left, and right sides of the first support element, respectively, and
the fourth mirror is disposed on the second support element,
wherein an image of a side surface of the mobile phone disposed on the base is reflected by the first to fourth mirrors.

5. The mobile phone purchasing apparatus of claim 4, wherein a hole configured to guide a data cable connectable to the mobile phone is formed on the second support element,
the base is configured to move forward or backward, and when the base moves backward, a movement of the mobile phone is limited by the second support element and only the data cable moves backward along with the base, and the data cable is separated from the mobile phone, and
when the base moves backward by a predetermined or greater level, the mobile phone falls toward the collection element by gravity.

6. The mobile phone purchasing apparatus of claim 5, wherein the inspection unit further comprises:
a guide element disposed on the plate and configured to guide a vertical motion of the second support element;
a connection element configured to connect the second support element and the guide element and move the second support element; and
a driving element configured to drive the connection element,
wherein the second support element is configured to move upward or downward as the connection element is driven.

7. The mobile phone purchasing apparatus of claim 5, wherein the inspection unit further comprises:
a cam element disposed on the plate and configured to guide a rotational motion of the second support element;
a link element configured to connect the second support element and the cam element and rotate the second support element; and
a driving element configured to drive the cam element,
wherein the second support element is configured to rotate with respect to a shaft passing through an upper end of the second support element as the cam element and the link element are driven.
